# EUROPEAN PATENT APPLICATION

(11) **EP 2 423 777 A1**
(43) Date of publication of application: **29.02.2012**
(21) Application number: 11178471.6
(22) Date of filing: 23.08.2011
(51) Int. Cl.: G05G 1/04, G05G 5/08, G05G 9/00, G05G 9/02, G05G 9/047, B60T 15/04

(54) **Operating control and operating unit for a vehicle**

(30) Priority: 24.08.2010 SE 1050862
(71) Applicant: Scania CV AB (publ), 151 87 Södertälje (SE)
(72) Inventor: Isenberg, Lars, 151 39 Södertälje (SE)

(57) **Abstract**

Operating control (1) and the operating unit (5) for a vehicle. The operating control is adapted to acting upon a control means (3) which regulates a first process and a second process of the vehicle. The operating control comprises a bottom element (10), an operating lever (12) with a first position (20) in which it is adapted to acting upon the control means so that the first process is effected, a second position (22) in which it is adapted to acting upon the control means so that the second process is effected, and a neutral position (24) in which it is adapted to acting upon the control means so that neither of the processes is effected, and means for allowing a first rotation of the operating lever between the neutral position and the first position and between the neutral position and the second position. The operating lever is adapted to being acted upon by a movement force so that it is moved between the neutral position and the first position in a first direction (D1) and between the neutral position and the second position in a second direction (D2) which is opposite to the first direction (D1).

## Description

### FIELD OF THE INVENTION

The present invention relates to an operating control for a vehicle, which operating control is adapted to acting upon a control means which regulates a first process and second process of the vehicle, such that the operating control comprises a bottom element, an operating lever comprising a longitudinal stem which protrudes away from the bottom element, which operating lever has a first position in which it is adapted to acting upon the control means so that the first process is effected, a second position in which it is adapted to acting upon the control means so that the second process is effected, and a neutral position in which it is adapted to acting upon the control means so that neither the first process nor the second process is effected, and means for causing a first rotation of the operating lever between the neutral position and the first position and between the neutral position and the second position, which first rotation changes the direction of the operating lever's longitudinal stem.

### STATE OF THE ART

A vehicle is operated by a driver controlling a number of processes of the vehicle via various operating controls on its instrument panel. The instrument panel comprises also one or more information displays to present operating information to the driver.

In today's vehicles, the driver is required to control a large number of processes, making it difficult for the instrument panel to accommodate all of the vehicle's operating controls and information displays.

There is therefore a problem of finding space for all of the vehicle's operating controls on its instrument panel. The operating controls also need to be configured in such a way that the driver can control the processes in a natural way which does not affect the driving of the vehicle. To save space on the instrument panel, the operating controls should therefore not require space for their movement.

Space on instrument panel may be saved by having operating controls which control two or more different processes of the vehicle. Operating controls which control two or more different processes also entail risk of the driver mistakenly regulating some other process than that desired.

SE0402113-5 refers to an operating lever which controls a vehicle's trailer brake and parking brake. The operating lever requires space for movement on both sides of it.

### SUMMARY OF THE INVENTION

An object of the present invention is to propose an operating control and an operating unit which reduce the risk of the driver mistakenly controlling a wrong process. A further object of the present invention relates to an operating control and an operating unit which occupy limited space on the vehicle's instrument panel. A further object of the present invention relates to an operating control and an operating unit which regulate a parking brake and a trailer brake in a way which is natural for the driver.

Said objects are achieved with the operating control indicated in the introduction which is characterised by the operating lever being adapted to being acted upon by a movement force so that the lever is moved between the neutral position and the first position in a first direction and between the neutral position and the second position in a second direction which is opposite to the first direction.

The operating control is adapted to being controlled by the operating lever being acted upon by the vehicle's driver such that the lever is moved by the first rotation from the neutral position to the first position or from the neutral position to the second position so that the respective first or second process is effected.

The control means is adapted to detecting the position of the operating lever, to activating the first process when the lever is in the first position and to activating the second process when the lever is in the second position.

Alteration of the position of the operating lever by the first rotation alters the direction of the longitudinal stem relative to the bottom element. The operating lever is adapted to being moved in opposite directions from the neutral position to the respective first and second positions. This reduces the risk of the driver mistakenly controlling a wrong process out of the first and second processes.

According to an embodiment of the invention the operating control comprises
a locking means comprising a locking state adapted to preventing the operating lever from being moved from the neutral position to the second position, and an open state adapted to allowing the operating lever to be moved from the neutral position to the second position,
means for causing a second rotation of the operating lever, which second rotation involves no change in the direction of the operating lever's longitudinal stem,
which locking means is adapted to being moved from the locking state to the open state by the second rotation of the operating lever.

The locking means is moved from the locking state to the open state by the second rotation, which second rotation takes place without affecting the first rotation. The driver is thus required to execute a movement which differs from that which he/she executes to act upon the operating lever by the first rotation. The locking means thus helps to reduce the risk of the driver moving the operating lever from the neutral position to the second position by mistake.

According to an embodiment of the invention the locking means is adapted to being moved from the locking state to the open state by the second rotation in a first rotational direction and to being moved from the locking state to the open state by the second rotation in a second rotational direction which is opposite to the first rotational direction.

According to an embodiment of the invention the means for allowing the first rotation is a first articulation with a first axis of rotation.

According to an embodiment of the invention the means for allowing the second rotation is a second articulation with a second axis of rotation, and the first axis of rotation and the second axis of rotation are at right angles to one another.

The right angle between the first axis of rotation and the second axis of rotation reduces the risk of the driver mistakenly moving the operating lever to an unintended position.

According to an embodiment of the invention the operating lever comprises a return means adapted to returning the lever from the second position to the neutral position when the movement force on the lever ceases.

The return means moves the operating lever back automatically from the second position to the neutral position when the driver releases the lever from the second position.

According to an embodiment of the invention the return means comprises an elastic element adapted to being deformed by the movement force when the operating lever is moved from the neutral position to the second position, to exerting on the lever a force in an opposite direction to the movement force, and moving the lever from the second position to the neutral position upon cessation of the movement force. The second process thus ends automatically when the operating lever is released by the driver from the second position.

According to an embodiment of the invention the locking means is adapted to being moved from the locking state to the open state by a turning force on the operating lever, and the return means is adapted to moving the locking means back from the open state to the locking state when the turning force on the lever ceases.

According to an embodiment of the invention the elastic element is adapted to being deformed by the turning force when the locking means is moved from the locking state to the open state, to exerting on the operating lever a force in an opposite direction to the turning force, and to moving the locking means from the open state to the locking state upon cessation of the turning force.

According to an embodiment of the invention the operating control comprises means for keeping the operating lever in the first position upon cessation of the movement force, which means is adapted to allowing the lever to return to the neutral position when it is acted upon by a return movement force which is directed towards the neutral position and exceeds a certain magnitude.

The means for retaining the operating lever keeps it in the first position even when the driver does not apply movement force to the lever. This means that the first process is maintained when the lever is in the first position even when the movement force on it ceases.

According to an embodiment of the invention the operating control is adapted to being situated on the vehicle's instrument panel adjacent to the windscreen such that the operating lever is adapted to being moved from the neutral position to the first position by being pulled away from the windscreen, and from the neutral position to the second position by being turned so that the locking means is moved from the locking state to the open state, after which the lever is pushed towards the windscreen.

The operating control is adapted to being so arranged that the first rotation is towards or away from the vehicle's windscreen. This means that the operating control occupies no space alongside when it is being used. The space which the operating control requires on the vehicle's instrument panel is thus reduced.

According to an embodiment of the invention the operating control is adapted to regulating the first process and the second process of a vehicle which is adapted to towing a trailer, and the first process pertains to activation of a parking brake for the vehicle and the second process to activation of a brake for the trailer.

According to an embodiment of the invention the operating lever comprises a handle which is adapted to being acted upon by a driver and which is provided with a first side adapted to facing in the first direction when the locking means is in the open state, and a second side adapted to facing in the first direction when the locking means is in the locking state, which second side is larger than the first side. According to an embodiment of the invention the handle is plate-like.

The second side of the handle being larger than the first side results in a significant visual difference between the operating lever being moved respectively from the neutral position to the first position and to the second position.

### BRIEF DESCRIPTION OF THE DRAWINGS

The invention is described below in more detail on the basis of various embodiments of it with reference to the attached drawings.
Figure 1 depicts an operating unit and an operating control which comprises an operating lever according to an embodiment of the invention.
Figure 2a depicts the operating control as seen from above when the operating lever is in a neutral position.
Figure 2b depicts the operating control as seen from above when the operating lever is in a first position.
Figure 3a depicts the operating control as seen from above when the operating lever is in a neutral position and a locking means is in a locking state.
Figure 3b depicts the operating control as seen from above when the operating lever is in the neutral position and the locking means is in an open state.
Figure 3c depicts the operating control as seen from above when the operating lever is in a second position and the locking means is in an open state.

### DETAILED DESCRIPTION OF PREFERRED EMBODIMENTS OF THE INVENTION

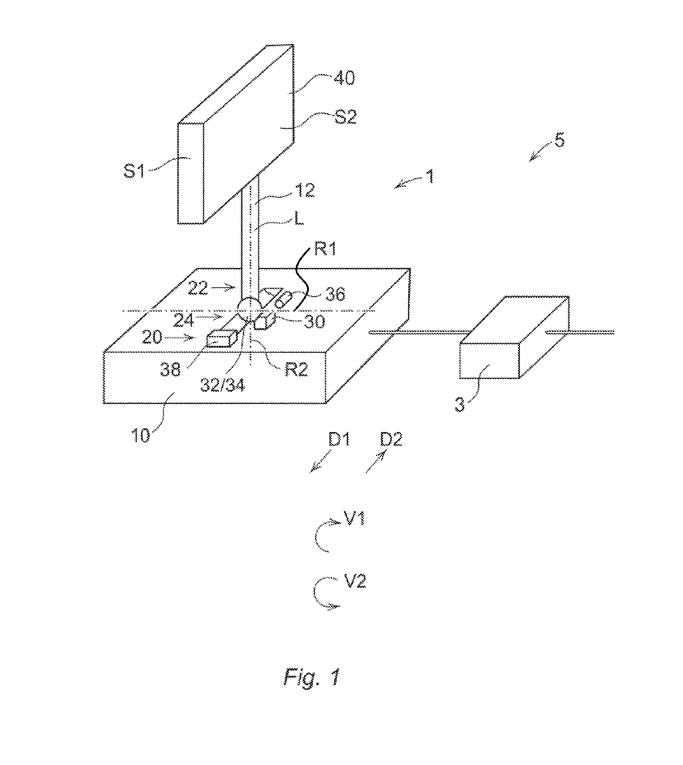

Figure 1 depicts the operating unit 5 which comprises an operating control 1 for a vehicle according to an embodiment of the invention. The operating control 1 is adapted to being fitted in a vehicle and being used by a driver during the operation of the vehicle. The operating control 1 is adapted to acting upon a control means 3.

The control means 3 is adapted to regulating at least a first and a second process of the vehicle. The control means 3 comprises means for effecting and ending the first and second processes. The control means 3 is controlled by the driver via the operating control 1.

The operating control 1 comprises a bottom element 10, an operating lever 12, means for allowing a first rotation of the lever 12 and means for allowing a second rotation of the lever 12.

The operating lever 12 has a first position 20, a second position 22 and a neutral position 24. In the first position 20 the lever 12 is adapted to acting upon the control means 3 so that the first process is effected. In the second position 22 the lever 12 is adapted to acting upon the control means 3 so that the second process is effected. In the neutral position 24 the lever 12 is adapted to acting upon the control means 3 so that neither the first nor the second process is effected.

The operating lever 12 is adapted to being acted upon by a movement force from the driver so that the lever is moved by the first rotation from the neutral position 24 to the first position 20 in a first direction D1 or from the neutral position 24 to the second position 22 in a second direction D2. The second direction D2 is opposite to the first direction D1.

The operating lever 12 comprises a longitudinal stem L which protrudes from the bottom element 10. The means for allowing a first rotation comprises a first articulation 32 with a first axis of rotation R1. Altering the position of the operating lever 12 alters the direction of its longitudinal stem.

The operating unit 5 and the operating control 1 are preferably situated in the vehicle's instrument panel adjacent to the windscreen so that the first direction D1 is away from the windscreen and the second direction D2 is towards the windscreen.

The operating control 1 comprises also a locking means 30 with a locking state and an open state such that the locking state is adapted to preventing the operating lever 12 from being moved from the neutral position 24 to the second position 22, and the open state is adapted to allowing the lever 12 to move from the neutral position 24 to the second position 22. The locking means 30 is adapted to not affecting the movement of the lever 12 between the neutral position 24 and the first position 20.

The locking means 30 is regulated by the second rotation of the operating lever 12. The locking means 30 is adapted to being moved from the locking state to the open state by the second rotation in a first rotational direction V1. The locking means 30 is adapted to being moved from the open state to the locking state by the second rotation in a second rotational direction V2 which is opposite to the first rotational direction V1.

The means for allowing the second rotation of the operating lever 12 comprises a second articulation 34 with a second axis of rotation R2. The second rotation takes place without affecting the longitudinal stem of the lever 12. The second axis of rotation R2 is preferably perpendicular to the first axis of rotation R1.

The operating lever 12 comprises also a plate-like handle 40 adapted to being acted upon by the driver when using the operating control 1. The handle 40 comprises a first side S1 and a second side S2 which is larger than the first side S1.

The first side S1 is adapted to facing in the first direction D1 when the locking means 30 is in the open state. The second side S2 is adapted to facing in the first direction D1 when the locking means 30 is in the locking state. The plate-like handle 40 shows the driver clearly which state the locking means 30 is in.

The operating control 1 comprises a return means adapted to automatically moving the operating lever 12 back from the second position 22 to the neutral position 24.

The return means comprises an elastic element 36 adapted to being deformed when the operating lever 12 is moved from the neutral position 24 to the second position 22, and to exerting on the lever 12 a force which is opposite to the movement force so that the lever 12 is moved back by the first rotation from the second position 22 to the first position when the movement force from the driver in the second position 22 ceases. The return means moves the lever 12 back automatically from the second position 22 to the neutral position 24 when the driver releases the lever 12 in the second position 22.

The elastic element 36 is adapted to being deformed when the locking means 30 is moved from the locking state to the open state, and to exerting on the operating lever 12 a force opposite to the movement force so that the lever 12 by the second rotation in the second rotational direction moves the locking means 30 back from the open state to the locking state. The return means moves the locking means 30 back automatically from the open state to the locking state when the driver releases the lever 12 in the second position 22.

The operating control 1 comprises means 38 for retaining the operating lever 12 in the first position 20 when the movement force on the lever 12 in the first position 20 ceases. The means 38 for retaining the lever 12 is adapted to allowing the lever 12 to move back from the first position 20 to the neutral position 24 when a return force directed towards the neutral position 24 exceeds a certain magnitude.

The vehicle is preferably adapted to towing a trailer. The first process comprises applying parking brakes on the vehicle and on any trailer. The second process comprises applying brakes on the trailer.

The parking brake process is adapted to being employed when the vehicle is stationary. The parking brake is also usable as an emergency brake for the vehicle. The trailer brake process is adapted to being employed when the vehicle is in motion. The trailer brake is used to avoid any incident whereby the trailer would push the vehicle forwards.

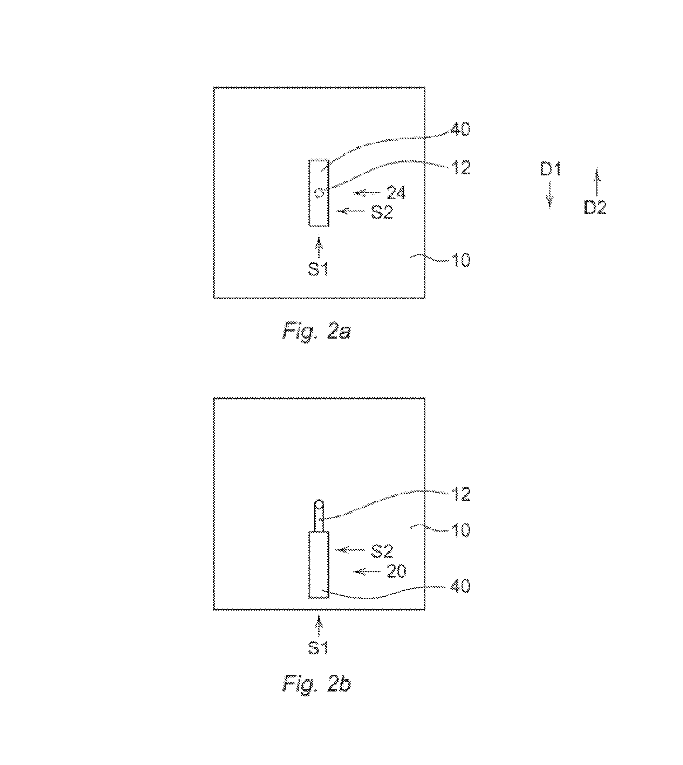

Figure 2a depicts the operating lever 12 in the neutral position 24 and Figure 2b depicts the lever 12 in the first position 20. The lever 12 is adapted to being acted upon by the movement force which by the first rotation moves the lever 12 from the neutral position 24 to the first position 20.

The operating lever 12 is adapted to being moved from the neutral position 24 in Figure 2a to the first position 20 in Figure 2b by the first rotation.

In both Figures 2a and 2b, during the movement between the neutral position 24 and the first position 20, the operating lever 12 is so oriented that the first side S1 of the handle 40 runs perpendicular to the first direction D1, and the second side S2 of the handle 40 runs in the first direction D1. Thus the lever 12 is adapted to being moved between the neutral position 24 and the first position 20 without the second rotation.

When the operating lever 12 has been moved to the first position 20, the means 38 for retaining it is adapted to keeping it in the first position 20. The means 38 for retaining the lever 12 allows it to move back to the neutral position 24 when a movement force in the second direction D2 exceeds a certain value.

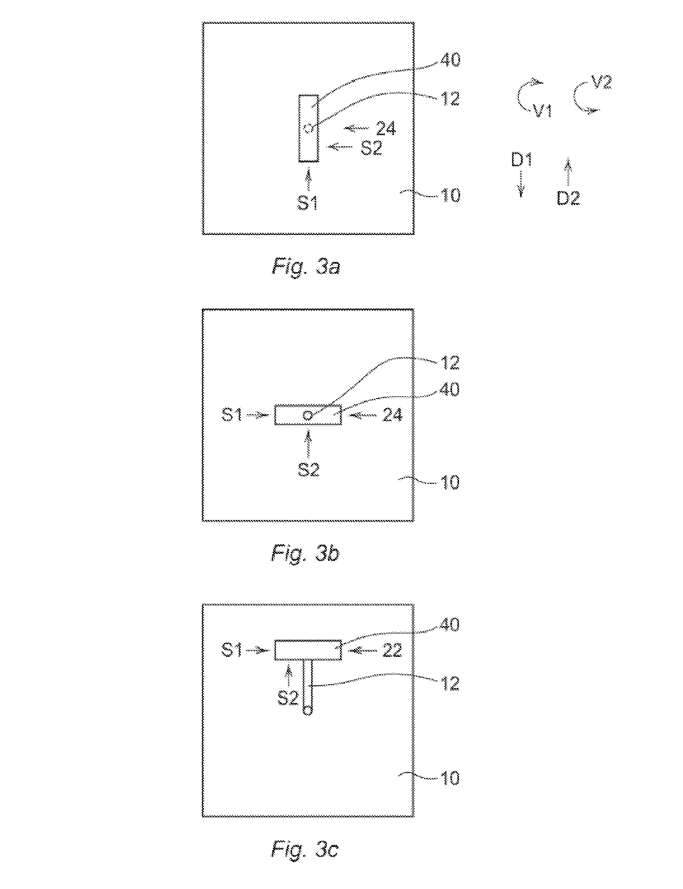

Figure 3a depicts the operating lever 12 in the neutral position 24 and the locking means 30 in the locking state. The lever 12 is so oriented that the first side S1 of the handle 40 runs perpendicular to the first direction D1, and the second side S2 of the handle 40 runs in the first direction D1.

Figure 3b depicts the operating lever 12 in the neutral position 24 and the locking means 30 in the open state. The lever 12 is so oriented that the second side S2 of the handle 40 runs perpendicular to the first direction D1, and the first side S1 of the handle 40 runs in the first direction D1.

Figure 3c depicts the operating lever 12 in the second position 22 and the locking means 30 in the open state. The lever 12 is so oriented that the second side S2 of the handle 40 runs perpendicular to the first direction D1, and the first side S1 of the handle 40 runs in the first direction D1.

The operating lever 12 is adapted to being moved from the neutral position 24 in Figure 3a to the second position 22 in Figure 3c by a first step a) comprising the second rotation of the lever 12 in the first rotational direction V1 so that the locking means 30 moves from the locking state to the open state, followed by a second step b) comprising the first rotation of the lever 12 in the second direction D2. Thus the lever 12 is adapted to being turned in the first rotational direction V1 from Figure 3a to the position in Figure 3b and thereafter to being moved from the neutral position 24 to the second position 22 in Figure 3c by the first rotation.

The return means is adapted to moving the operating lever 12 back from the second position 22 to the neutral position 24 when the movement force on the lever 12 ceases. The lever 12 is adapted to being moved by the return means in the first direction D1 from the second position 22 to the neutral position 24. In the same way, the return means is adapted to moving the locking means 30 back from the open state to the locking state when the movement force on the lever 12 ceases. The locking means 30 is moved from the open state to the locking state by the second rotational direction V2 of the lever 12.

According to an embodiment, movement of the operating lever 12 from the neutral position 24 to the first position 20 is blocked when the lever 12 is in the open state.

The invention is not restricted to the embodiments depicted but may be modified and varied within the scope of the claims set out below.

For example, the operating control 1 may be adapted to controlling further processes by moving the operating lever 12 in directions other than the first and the second direction D1 and D2. Alternatively, the locking means 30 may also block movement between the neutral position 24 and the first position 20.

## Claims

1. An operating control (1) for a vehicle, which operating control (1) is adapted to acting upon a control means (3) which regulates a first process and a second process of the vehicle, such that the operating control (1) comprises
- a bottom element (10),
- an operating lever (12) comprising a longitudinal stem (L) which protrudes away from the bottom element (10), such that the operating lever (12) has a first position (20) in which it is adapted to acting upon the control means (3) so that the first process is effected, a second position (22) in which it is adapted to acting upon the control means (3) so that the second process is effected, and a neutral position (24) in which it is adapted to acting upon the control means (3) so that neither the first process nor the second process is effected, and
- means for allowing a first rotation of the operating lever (12) between the neutral position (24) and the first position (20), and between the neutral position (24) and the second position (22), which first rotation alters the direction of the operating lever's longitudinal stem (L),
**characterised**
**in that** the operating lever (12) is adapted to being acted upon by a movement force so that it is moved between the neutral position (24) and the first position (20) in a first direction (D1) and between the neutral position (24) and the second position (22) in a second direction (D2) which is opposite to the first direction (D1).

2. An operating control (1) according to claim 1, **characterised in that** the operating control (1) comprises
- a locking means (30) comprising a locking state adapted to preventing the operating lever (12) from being moved from the neutral position (24) to the second position (22), and an open state adapted to allowing the operating lever (12) to be moved from the neutral position (24) to the second position (22),
- means for allowing a second rotation of the operating lever (12) which takes place without affecting the direction of the operating lever's longitudinal stem (L),
to which end the locking means (30) is adapted to being moved from the locking state to the open state by the second rotation of the operating lever (12).

3. An operating control (1) according to claim 2, **characterised in that** the locking means (30) is adapted to being moved from the locking state to the open state by the second rotation in a first rotational direction (V1) and to being moved from the locking state to the open state by the second rotation in a second rotational direction (V2) which is opposite to the first rotational direction (V1).

4. An operating control (1) according to any one of the foregoing claims, **characterised in that** the means for allowing the first rotation comprises a first articulation (32) with a first axis of rotation (R1).

5. An operating control (1) according to claim 4, **characterised in that** the means for allowing the second rotation comprises a second articulation (34) with a second axis of rotation (R2) which is perpendicular to the first axis of rotation (R1).

6. An operating control (1) according to any one of the foregoing claims, **characterised in that** it comprises a return means adapted to moving the operating lever (12) back from the second position (22) to the neutral position (24) when the movement force on the operating lever (12) ceases.

7. An operating control (1) according to claim 6, **characterised in that** the return means comprises an elastic element (36) adapted to being deformed by the movement force when the operating lever (12) is moved from the neutral position (24) to the second position (22), to exerting on the operating lever (12) a force opposite to the movement force and, upon cessation of the movement force, to moving the operating lever (12) from the second position (22) to the neutral position (24).

8. An operating control (1) according to either of claims 6 and 7, **characterised in that** the locking means (30) is adapted to being moved from the locking state to the open state by a turning force on the operating lever (12), and the return means is adapted to moving the locking means (30) back from the open state to the locking state when the turning force on the operating lever (12) ceases.

9. An operating control (1) according to claim 8, **characterised in that** the elastic element (36) is adapted to being deformed by the turning force when the locking means (30) is moved from the locking state to the open state, to exerting on the operating lever (12) a force opposite to the turning force and, upon cessation of the turning force, to moving the locking means (30) from the open state to the locking state.

10. An operating control (1) according to any one of the foregoing claims, **characterised in that** it comprises means (38) for retaining the operating lever (12) in the first position (20) upon cessation of the movement force, which means (38) is adapted to allowing the operating lever (12) to return to the neutral position (24) when the lever (12) is acted upon by a return movement force which is directed towards the neutral position (24) and exceeds a certain magnitude.

11. An operating control (1) according to any one of the foregoing claims, **characterised in that** it is adapted to being situated on the vehicle's instrument panel adjacent to the windscreen, such that the operating lever (12) is adapted to being moved from the neutral position (24) to the first position (20) by being pulled away from the windscreen, and to being moved from the neutral position to the second position (22) by being turned so that the locking means (30) is moved from the locking state to the open state, after which the operating lever (12) is pushed towards the windscreen.

12. An operating control (1) according to any one of the foregoing claims, **characterised in that** it is adapted to regulating the first process and the second process of a vehicle which is itself adapted to towing a trailer, such that the first process refers to activation of a parking brake for the vehicle and the second process to activation of a brake for the trailer.

13. An operating control (1) according to any one of the foregoing claims, **characterised in that** the operating lever (12) comprises a handle (40) adapted to being acted upon by a driver, which handle is provided with a first side (S1) adapted to running in the first direction (D1) when the locking means (30) is in the open state, and a second side (S2) adapted to running in the first direction (D1) when the locking means (30) is in the locking state, which second side (S2) is larger than first side (S1).

14. An operating control (1) according to claim 13, **characterised in that** the handle (40) is plate-like.

15. An operating unit (5) for a vehicle comprising an operating control (1) according to any one of claims 1-14, **characterised in that** the operating unit (5) comprises control means (3) adapted to detecting the position of the operating lever (12), to activating the first process when the operating lever (12) is in the first position (20) and to activating the second process when the operating lever (12) is in the second position (22).
